# EUROPEAN PATENT SPECIFICATION

(11) **EP 1 635 602 B1**
(45) Date of publication and mention of the grant of the patent: **29.12.2010**
(21) Application number: 05108180.0
(22) Date of filing: 07.09.2005
(51) Int. Cl.: H04W 72/08

(54) **Resource management method**
Ressourcen-Verwaltungsverfahren
Procédé de gestion des ressources

(30) Priority: 09.09.2004 JP 2004262524
(43) Date of publication of application: 15.03.2006
(73) Proprietor: NEC Corporation, Minato-ku Tokyo 108-8001 (JP)
(72) Inventor: Mikoshiba, Takanori, Tokyo (JP); Ito, Kenichi, Tokyo (JP); Takagi, Kenki, Tokyo (JP)
(74) Representative: Betten & Resch

(56) References cited:
- DE-A1- 10 156 265
- US-A1- 2002 049 062
- US-A1- 2003 189 915
- US-A1- 2004 125 800

## Description

### BACKGROUND OF THE INVENTION

**Technical Field**

The present invention relates to a communication system, a radio base station and a radio network controller and a resource management method.

**Background Art**

A radio access network system comprises a radio base station apparatus (Node B) and a radio network control apparatus (RNC), the radio base station apparatus being connected with a plurality of mobile devices, and the radio base station control apparatus being connected to an upper-level core network which performs line switching and packet switching. In a system having such configuration, when a call setup is performed, resources are consumed in the radio base station apparatus, such as a radio band determined by the number of codes, a symbol rate, etc. in the case of W-CDMA (Wideband-Code Division Multiple Access) are consumed. When priority is provided for a call setup, it is possible to release existing resources in accordance with the priority and to preferentially set up a call with high priority. This function is referred to as a pre-emption function. Next, an example of a conventional pre-emption function is explained.

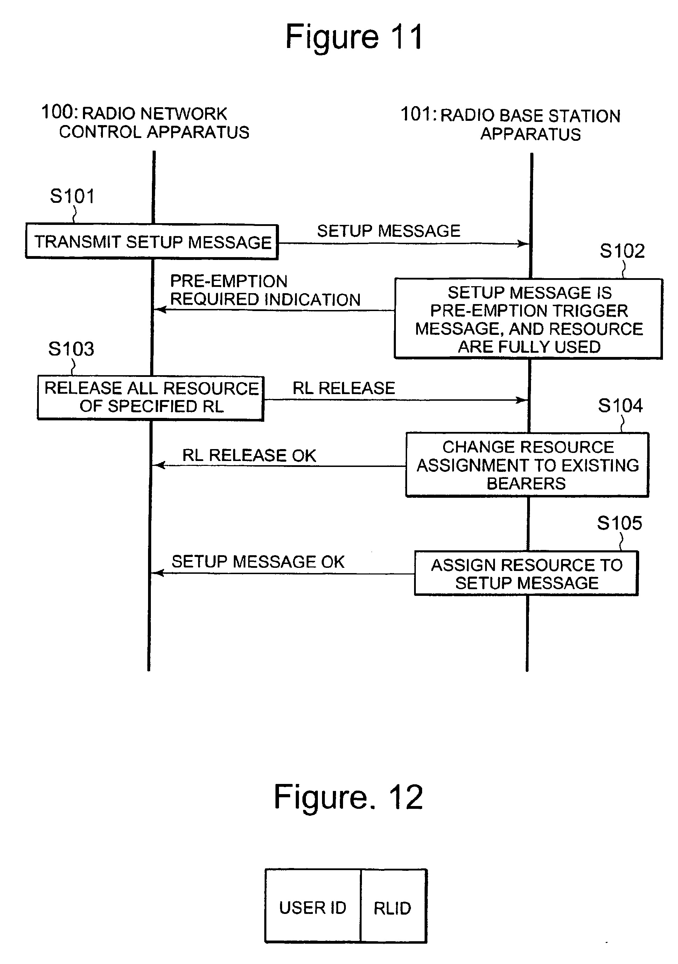

Figure 11 is a diagram showing a conventional communication sequence between a radio base station apparatus 101 and a radio network control apparatus 100. Figure 12 shows a format of a pre-emption required indication in the communication sequence depicted in Figure 11. The radio base station apparatus 101 receives a setup message from the radio network control apparatus 100 in step S101. The setup message is a pre-emption trigger message, and when there is no free resource, the radio base station apparatus 101 specifies only user ID (Identification) and RLID (Radio Link ID) for identifying bearers in the pre-emption required indication shown in Figure 12, and transmits the pre-emption required indication to the radio network control apparatus 100 (step S102). The radio network control apparatus 100 which has received the pre-emption required indication sends the radio base station apparatus 101 an instruction to perform a compulsive call deletion for all specified RLs (Radio Links) (step S103). The radio base station apparatus 101 changes assignment of resources to existing bearers, and returns a response to the compulsive call deletion to the radio network control apparatus 100 (step S104). Further, the radio base station apparatus 101 assigns resources according to the setup message, and returns a response to the setup message to the radio network control apparatus 100 (step S105). In the above described communication sequence, when there is a shortage in resources in the radio base station apparatus 101, links are arranged to be disconnected.

Japanese Patent Laid-Open No. 2003-209871 shows a urgent call connection method in which, when an urgent call, which is an example of a call that is set high priority level, is sent from a mobile device belonging to a mobile communication system, the urgent call can be connected even if all radio resources of a radio base station are used. In this method, the mobile device in a mobile communication system, when performing handover at the time of making an urgent call or during urgent calling, notifies a switching control station of an urgent call notice message via a radio base station or a radio base station of the handover destination. When all radio resources in the radio base station or in the radio base station of the handover destination are used, the switching control station selects a specific channel from the radio resources used by one of the radio base stations, and, to reduce processing load for the selected specific channel so that free resources for the urgent call are secured, assigns the urgent call to the secured free resources.

Japanese Patent Laid-Open No. 2003-32753 shows a public communication system and a technique for providing a necessary high-speed service for a mobile communications terminal flexibly as required. The public communication system comprises a plurality of communication networks of different service purposes, a plurality of mobile communication terminals communicating with the plurality of communication networks, and a W-CDMA system. The W-CDMA system connects and integrates a plurality of communication networks. Furthermore, the W-CDMA system controls transmission rates at which each of the plurality of mobile communication terminals communicates with the plurality of communication networks, on the basis of priority levels of each of the plurality of mobile communication terminals.

In recent communication networks of movable bodies etc., for example, there has been an increase in the number of cases of handling various calls typified by a multi-call in which a plurality of communications are simultaneously performed by a single mobile device. In addition, there is a case where resources set up in the uplink and those set up in the downlink are different.

A technique for managing resources in accordance with priorities of calls is known in the art. However, a technique for flexibly changing resources in a radio base station apparatus in accordance with the recent various call setups has not yet been disclosed, and it has been desired to maintain and manage resources in the radio base station apparatus effectively and flexibly.

In US-A-2003/0125800, associated systems and methods for providing data services using idle cell capacity in a communications system are disclosed. The system and methods assign priorities to each remote user device in the communications system. In response to a request for service for a remote user device, the switch determines whether an idle channel is available for the remote user device. If no idle channel is available, the switch determines whether a remote user device with a lower priority than the requesting remote user device is using a channel. If a lower priority remote user device is using a channel, its call is terminated and the channel is assigned to the requesting remote user device. If no lower priority remote user device is using a channel, the request for service is put into an ordered queue to wait for the next available idle channel.

In US-A-2002/0049062, a mobile communications system with disputed admission control is disclosed. Admission control is moved from a controlling radio network controller (CRNC) to a node B so as to avoid possible errors relating to fragmentation that occur in systems in which the CRNC controls admission. Node B is coupled to a radio network controller and operable to control a plurality of internal resources for admission control.

### SUMMARY OF THE INVENTION

An exemplary object of the present invention is to solve the problem described above and to provide a resource management method according to which a radio resource assignment can be changed flexibly without releasing all radio resources that have been assigned to a certain radio link in order to establish a new radio link.

According to a further exemplary object of the present invention, the resource management method as defined by the present invention flexibly changes resources in the radio base station apparatus so as to maintain existing links by changing rates without releasing the existing calls, in the case where resources are consumed due to a new call setup request.

A method according to the present invention is defined in claim 1.

### BRIEF DESCRIPTION OF THE DRAWINGS

These and other features, aspects, and advantages of the present invention will become better understood with reference to the following description and accompanying drawings, which should not be read to limit the invention in any way, in which:

Figure 1 is a block diagram showing a configuration of a radio access network system according to an exemplary embodiment of the present invention;

Figure 2 shows a communication sequence between a radio network control apparatus and a radio base station apparatus according to the exemplary embodiment of the present invention;

Figure 3 shows a format of a setup message and a rate change message, which are sent from the radio network control apparatus to the radio base station apparatus according to the exemplary embodiment;

Figure 4 shows a format of a pre-emption required indication message according to the exemplary embodiment;

Figure 5 shows an example of a management table held by the radio network control apparatus;

Figure 6 shows an example of a SF/resource comparison table held by the radio base station apparatus;

Figure 7 shows an operation of the radio base station apparatus according to a first exemplary embodiment of the present invention;

Figure 8 shows details of step S23 in Figure 7;

Figure 9 shows an exemplary configuration of the user management table;

Figure 10 shows a format of a pre-emption required indication message according to a second exemplary embodiment of the present invention;

Figure 11 shows a conventional communication sequence between a radio base station apparatus and a radio network control apparatus; and

Figure 12 shows a format of a pre-emption required indication in the conventional communication sequence.

### DETAILED DESCRIPTION OF THE INVENTION

The described exemplary embodiments are intended to assist in the understanding of the invention and are not intended to limit the scope of the invention in any way.

According to an exemplary embodiment of the present invention, a communication system comprises a radio network controller or a radio network control apparatus, a base station or a base station apparatus and a plurality of mobile devices. The base station establishes a plurality of radio links between the base station and the plurality of mobile devices. The plurality of mobile devices communicate with the base station via the plurality of radio links.

The base station assigns each of the plurality of radio links or calls a plurality of radio resources. That is, each radio link is established based on plural radio resources. For example, the radio resources may be defined in terms of a length of a spreading code, a symbol rate in a Code Division Multiple Access (CDMA) network. Furthermore, radio resource may be defined in terms of any other parameter as would be understood in the art that may be utilized to define the radio resource. The necessary number of resources for establishing a radio link may be determined corresponding to a spreading factor for the radio link or any other parameter as would be understood in the art.

When establishing a new radio link, the base station selects at least one radio link from the plurality of radio links based on priority levels that are set for the plurality of radio links. The base station may select at least one radio link with a lower priority than a priority level to be set for the new radio link in order to change the assignment of the radio resources to the plurality of radio link. The priority level to be set for the new radio link may be included in a message, which instructs the base station to establish the new radio link, transmitted from the network controller and received by the base station.

Furthermore, each of the radio resources may be associated with information about whether it is subject to being released from at least one radio resource. Accordingly, the base station may select a radio link that is subject to being released from at least one radio resource and has a lower priority level than the priority level to be set for the new radio link.

Subsequently, the base station releases at least one but not all radio resources from the chosen radio link. The base station may release radio resources from plural radio links. For example, in a case where the base station chose a first radio link and a second radio link, the base station may release all radio resources except the minimum number of radio resources from the first radio link and releases at least one but not all radio resources from the second radio link. The minimum number of radio resources may be determined in advance as a parameter in the communication network.

Finally, the base station assigns the released radio resource to the new radio link.

Here, the base station may start changing the radio resource assignment in a case where a total number of necessary resources for establishing the new radio link and the plurality of resources assigned to the plurality radio links that have been established is larger than the maximum number of radio resources for the base station. Information regarding the number of the necessary radio resources for establishing the new radio link may be included in the message from the radio network controller. Furthermore, the information regarding the necessary number may be a spreading factor for the new radio link, where the new radio link is established based on a CDMA technique. Also, the information may be any other information as would be understood in the art that may show the number of necessary radio resources. In addition, the base station may select at least one radio link from the plurality of radio links if the new radio link is subject to being established by releasing at least one radio resource which is assigned to a radio link other than the new radio link. Information about whether the new radio link is subject to being established by releasing at least one radio resource which is assigned to a radio link other than the new radio link may be included in the message from the radio network controller.

Accordingly, a radio resource assignment may be changed flexibly without releasing all radio resources that have been assigned to a certain radio link in order to establish a new radio link.

According to another exemplary embodiment, the base station transmits a second massage indicating that a change is necessary in the radio resource assignment to the plurality of radio links in order to establish the new radio link, after receiving, from the radio network controller, the message instructing the base station to establish the new radio link. The radio network controller receives the second message. In response to the second message, the network controller transmits a third message instructing the base station to change the radio resource assignment as described above with regard to the base station.

Accordingly, a radio resource assignment may be changed flexibly without releasing all radio resources that have been assigned to a certain radio link in order to establish a new radio link.

According to a further exemplary embodiment of the invention a resource management method is a method in which a radio base station apparatus connected with a radio network control apparatus may manage resources of users. In this method, when securing resources for a new call or a new radio link setup request, resources of existing users may be managed in accordance with a priority so as to enable links of existing users to be maintained and a part of resources corresponding to the links to be released.

A resource management method according to another exemplary embodiment of the present invention is a method in which a radio base station apparatus connected with a radio network control apparatus may manage resources of users. The method may comprise the steps of: receiving a setup message for a new call setup request from the radio network control apparatus; determining whether or not there are free resources of existing users for performing the call setup; and determining whether or not the setup message is a message to preferentially secure resources for the call setup by maintaining links of the existing users and by releasing a part of resources corresponding to the links. The method also may comprise the steps of: in the case where there is no idle portion in the resources of existing users and the setup message is a message to preferentially secure resources, searching in the order of ascending priority level for existing users whose priority levels are lower than that of the setup message and whose resources can be changed; and in the case where a total of the resources of existing users whose resources can be changed exceeds resources required for performing the call setup as a result of the search, releasing all or a part of the resources of existing users and securing new resources for the call setup.

In the resource management method, the resources may be managed for each user in terms of an uplink signal from a mobile device connected with the radio base station apparatus to the radio base station apparatus and to a downlink signal from the radio base station apparatus to the mobile device, respectively.

In the resource management method, the number of resources may be defined corresponding to spreading factors.

In the resource management method, the setup message may include at least user identification information for identifying a mobile device of a call setup object, resource information desired at the time of setting up a link of the mobile device connected to the radio base station apparatus, and priority information with respect to existing users.

In the resource management method, the setup message may further include information regarding indication of whether the priority information is effective or ineffective.

In the resource management method, the setup message preferably includes for each of plural individual channels the priority information and the information regarding indication of whether the priority information is effective or ineffective.

A radio base station apparatus according to an exemplary embodiment of the present invention may comprise a transceiver section which transmits and receives a message relating to a call setup request to and from a radio network control apparatus, and a user management table for managing resources of users. The radio base station apparatus may further comprise a control section performing control, which determines whether or not there is an idle portion in resources of existing users in order to perform the call setup with reference to the user management table, in the case where a setup message for a new call setup request is received. The control section determines whether or not the setup message is a message to preferentially secure resources for the call setup by maintaining links of the existing users and by releasing a part of the resources corresponding to the links. Further, the control section searches in the order of ascending priority level for the existing users whose priority level are lower than that specified by the setup message and whose resources can be changed, in the case where there is no idle portion in the resources of existing users and the setup message is a message to preferentially secure resources. The control section releases all or a part of the resources of existing users and secures new resources for the call setup, in the case where a total of the resources of existing users whose resources can be changed exceeds resources required for performing the call setup as a result of the search.

In the radio base station apparatus, the user management table may include priority level of user links which are managed for each user, resources in an uplink, and resources in a downlink.

In the radio base station apparatus, the number of resources may be defined corresponding to spreading factors.

In radio base station apparatus, the user management table may further include information about whether the priority information is effective or ineffective.

In radio base station apparatus, the user management table may further include for each of plural individual channels the priority level information and the information about whether the priority level information is effective or ineffective.

In radio base station apparatus, a radio access network system may comprise the radio base station apparatus and the radio network control apparatus.

Exemplary embodiments of the invention are described below with reference to the attached figures. The described exemplary embodiments are intended to assist in the understanding of the invention and are not intended to limit the scope of the invention in any way.

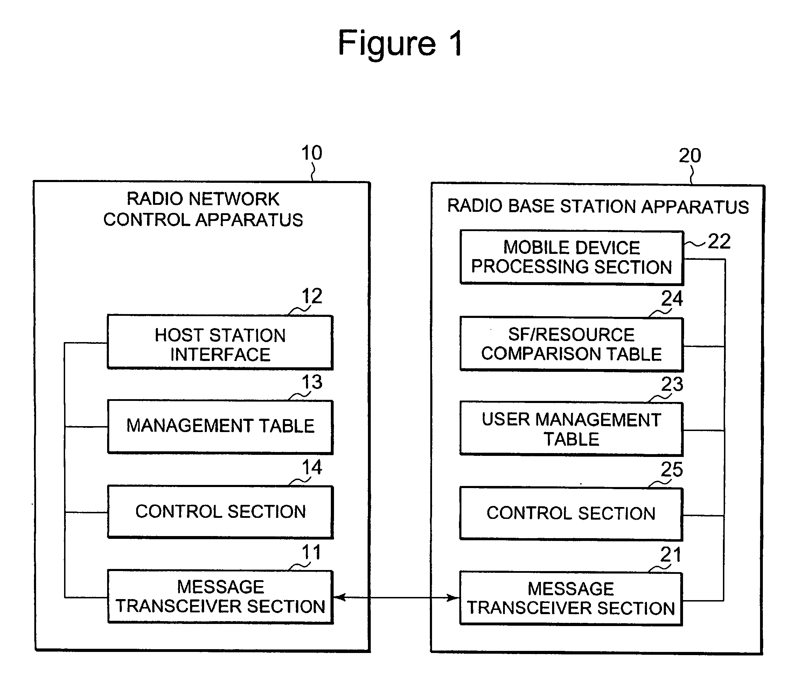

Figure 1 is a block diagram showing a configuration of a radio access network system according to an exemplary embodiment of the present invention. In Figure 1, the radio access network system comprises a radio network control apparatus (RNC) 10 and a radio base station apparatus (Node B) 20. The radio network control apparatus 10 comprises a message transceiver section 11 which performs transmission and reception of a message to and from the radio base station apparatus 20, a host station interface 12 for effecting connection with an upper level core network which performs line switching and packet switching, a management table 13 for managing UL resources and DL resources of given bearers. Furthermore, the radio network control apparatus 10 comprises a control section 14 which controls the radio network control apparatus 10. For example, the control section 14 transmits a setup message and a rate change message to the base station apparatus and receives a pre-emption required indication from the base station apparatus as described later in detail. The control section may comprise a CPU, a memory and/or any other circuit as would be understood in the art. In addition, the radio network control apparatus 10 has various functions, such as channel multiplexing and demultiplexing, ATM switching, diversity hand-over, and maintenance operation, but the description of portions not concerned with the exemplary embodiments of the present invention will be omitted below.

The radio base station apparatus 20 comprises a message transceiver section 21 which performs transmission and reception of a message to and from the radio network control apparatus 10, a mobile device processing section 22 which is connected with a plurality of mobile devices and which performs control processing of radio transmission and reception, a user management table 23 for managing resources of mobile devices (users), a SF (spreading factor)/resource comparison table 24 for comparing spreading factors and resources. Furthermore, the base station apparatus 20 comprises a control section 25 which controls the radio base station apparatus 20. For example, the control section 25 performs a resource management as described later in detail. The control section 25 may comprise a CPU, a memory and/or any other circuit as would be understood in the art. Although the mobile device processing section 22 in the radio base station apparatus 20 has various functions for effecting connection with mobile devices, the functions are not concerned with the exemplary embodiment of present invention and hence the explanation thereof will be omitted. A communication sequence between the radio network control apparatus 10 and the radio base station apparatus 20 in the case where a new call setup is generated will be described below.

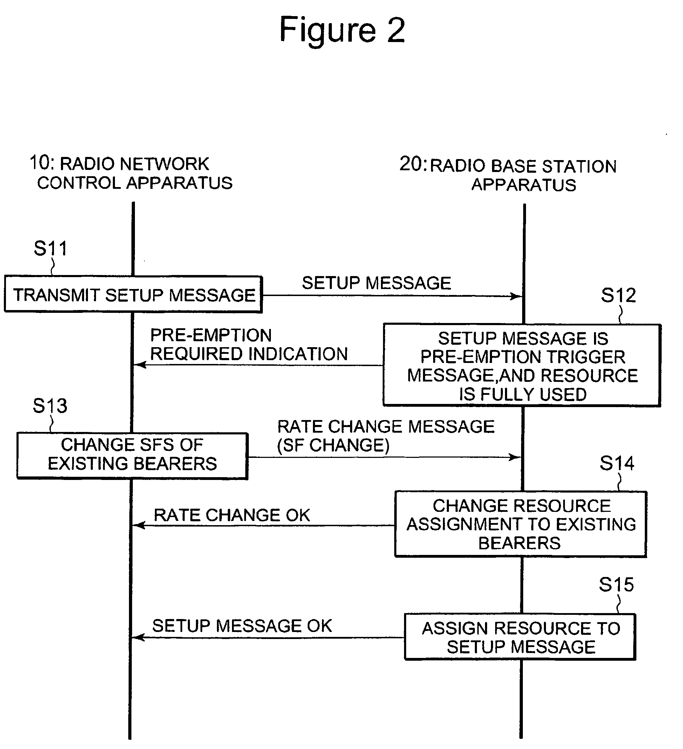

Figure 2 is a flow chart showing a communication sequence between the radio network control apparatus and the radio base station apparatus according to an exemplary embodiment of the present invention. In Figure 2, the radio network control apparatus 10 transmits, in accordance with a request of a new call setup, a setup message including priority level information to the radio base station apparatus 20 via the message transceiver section 11 (step S 11).

The radio base station apparatus 20 calculates the number of resources required for the setup with reference to spreading factor information in the setup message received via the message transceiver section 21. In the case where a total number of the calculated number of resources and the number of existing resources exceeds the maximum number of resources in the radio base station apparatus and a new call setup can therefore not be achieved, the radio base station apparatus 20, which selects users as users corresponding to the pre-emption with priority levels lower than that of the user to be set up with reference to the user management table 23, calculates SF change values of users corresponding to the pre-emption so as to make it possible to set up the number of resources required for assigning the user to be set up. Subsequently, the base station apparatus 20 transmits a pre-emption required indication to the radio network control apparatus 10 via the message transceiver section 21 (step S12).

The radio network control apparatus 10 which has received the pre-emption required indication determines a possible rate change pattern on the basis of the indicated SFs, and transmits a rate change message to the radio base station apparatus 20 via the message transceiver section 11 (step S13). The radio base station apparatus 20, which secures free resources by this rate change, returns an OK response to the rate change message via the message transceiver section 21 (step S14), and further returns an OK response to the setup message (step S15).

As described above, in the management method of call setup with priority level which is performed between the radio network control apparatus 10 and the radio base station apparatus 20, when resources are fully used at the time of setting a bearer with a high priority level in the radio base station apparatus, resources are secured so as to make it possible to setup the radio link with the high priority level, while maintaining links with low priorities for bearers with low priority levels. That is, contrary to existing call setups which are usually subjected to call deletion, the operation is made so as to maintain as many of the existing call setups as possible.

[Exemplary embodiment 1]

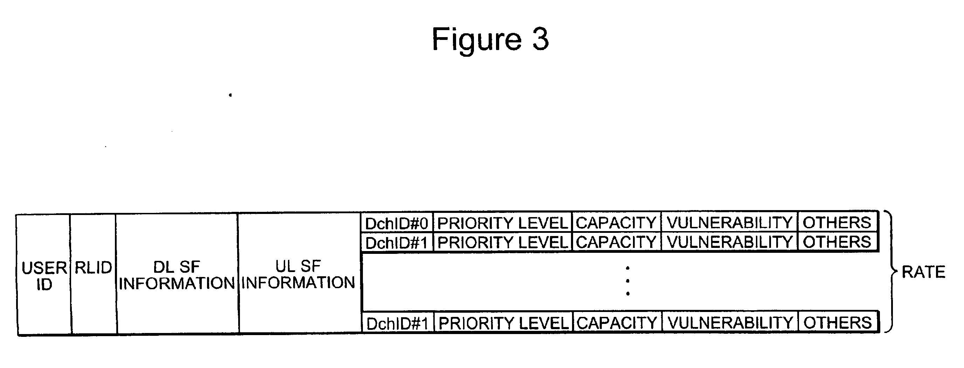

Next, an exemplary embodiment of the radio base station apparatus is more specifically described. In Figure 1, in addition to regular control of the radio base station, the radio network control apparatus 10 maybe capable of immediately determining a possible SF pattern (i.e., information which is expected in a message described in Figure 3) in response to a SF change request for existing bearers, and also be capable of setting the judgment result in the radio base station apparatus 20. The radio base station apparatus 20, in the case where resources are fully used and a link corresponding to a setup message having pre-emption information can not be set up, immediately calculates bearers among the existing bearers which can be changed in SF, and transmits the radio network control apparatus 10 the changing in SF that is required so that resources required for the new call setup can be assigned.

Figure 3 shows a format of a setup message and a rate change message sent from the radio network control apparatus 10 to the radio base station apparatus 20. The message comprises user ID (Identification) for identifying a user, RLID (Radio Link ID) for identifying a bearer, SF information for determining resources necessary for the user's DL/UL (Down Link/Up Link), and field consisting of groups, each including DchID number provided for each DchID (Data or Dedicated Channel ID) and for identifying multiplexed transport channels, Priority Level, Capability, Vulnerability and other setup information (Other Information).

The priority level may take a value within a fixed range, and here a larger value of the priority level is regarded as a lower priority level and the largest value of the priority level is regarded as no priority level (no operation of the pre-emption function). In the case where all priority levels set for each DchID have no priority level, the setup message is not treated as a message for starting the pre-emption. The Capability which holds two states of ON and OFF, is treated as an Pre-Emption Trigger Message for starting the pre-emption in the ON state, and is not treated as the Pre-Emption-Trigger Message in the OFF state. The Vulnerability also has two states of ON and OFF. The user associated with the message with the ON state of Vulnerability is subject to the pre-emption. That is, even after a radio link is established for the user, its SF can be changed by rate change in the pre-emption procedure. On the other hand, a user associated with the message with the OFF state of Vulnerability is not subject to the pre-emption. Also, in the case where one of the Capability and the Vulnerability is in the ON state, an effective priority level value may be surely set and the maximum priority level value (= no priority level) may not be set.

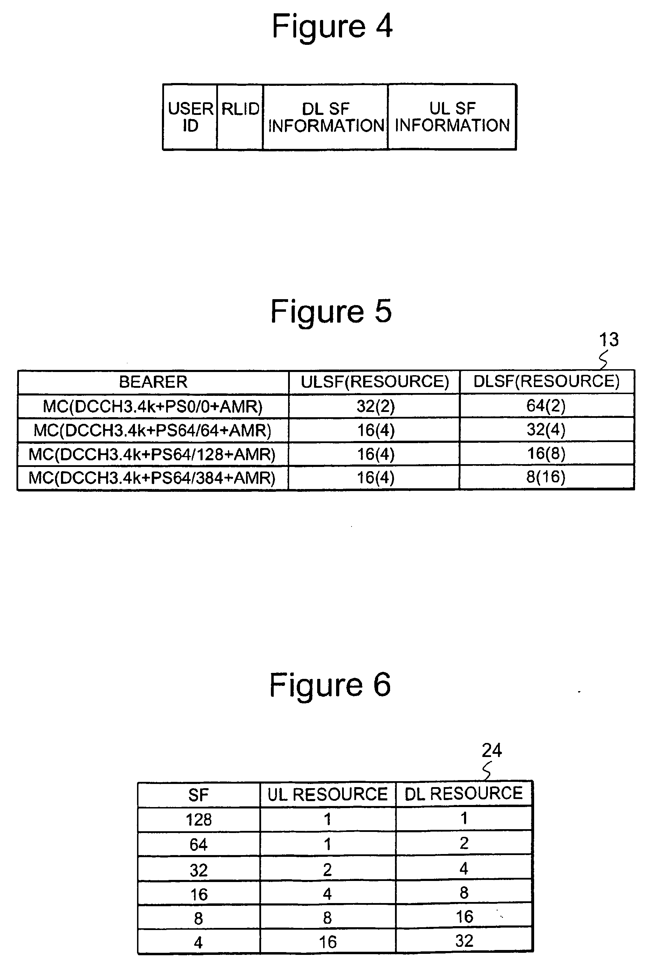

Figure 4 shows a format of a pre-emption required indication message. This message comprises a field for notifying user ID, RLID. The message further comprises DLSF (Down Link Spreading Factor) information, and ULSF (Up Link Spreading Factor) information, each of which shows a change in SF that is required so that resources required for the new call setup can be assigned.

Figure 5 is a figure showing an example of the management table 13 held by the radio network control apparatus 10. The DLSF and ULSF are managed to respectively be values indicated in the management table 13 in Figure 5, for each multi-call bearer which simultaneously performs a plurality of communications by a single mobile device. For example, when the radio base station apparatus 20 assigns DLSF = 32 to a multi-call user to whom DCCH (Dedicated Control CHannel), PS (Packet Switching) 64/128 and AMR (Adaptive MultiRate) are multiplexed, the radio network control apparatus 10 can change a mode to MC (DCCH 3.4 k + PS 64/64 ÷ AMR) with reference to the management table 13 in Figure 5. Here, the MC (DCCH 3.4 k + PS 64/64 ÷ AMR) represents a multi-call which includes DCCH of 3.4 kbps, PS of 64 kbps for both an uplink and a downlink and AMR.

Figure 6 shows an example of SF/resource comparison table 24 held by the radio base station apparatus 20. The radio base station apparatus 20 calculates UL and DL resources required in the radio base station apparatus 20 with reference to the SF/resource contrast table 24, on the basis of SF information specified by the radio network control apparatus 10.

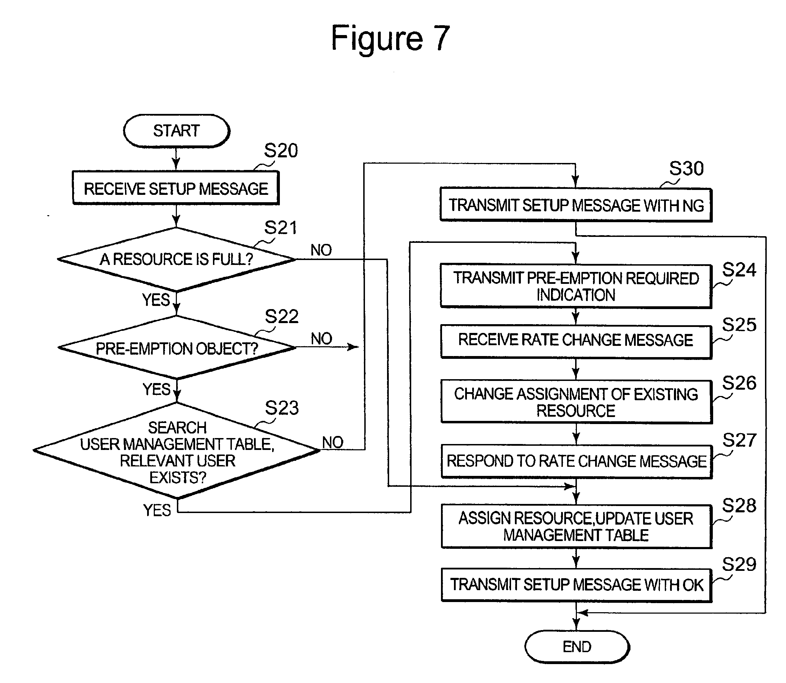

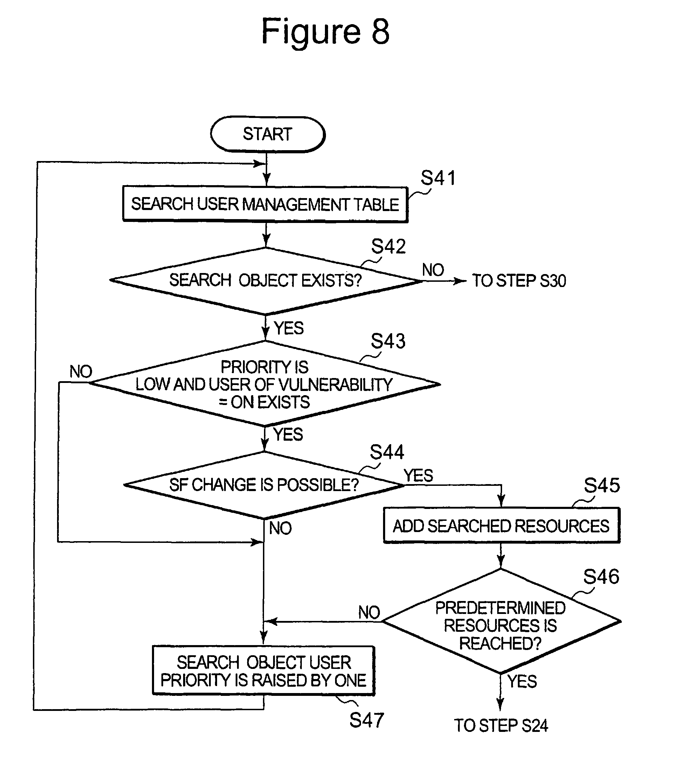

Next, an operation of the present exemplary embodiment is described with reference to Figure 7 and Figure 8. Figure 7 shows an operation of the radio base station apparatus according to a first exemplary embodiment of the present invention. Figure 8 shows details of step S23 in Figure 7. In Figure 7, the radio base station apparatus 20 receives a setup message as shown in Figure 3 that specifies priority levels from the radio network control apparatus 10 (step S20). The radio base station apparatus 20 receives the setup message and determines whether or not a radio link or a call can be established for the user associated with the setup message within the maximum number of resources in the present radio base station apparatus 20 with reference to DLSF/ULSF information in the message (step S21), and holds ID information, SF information, pre-emption information, etc. for each user ID in the user management table 23 of the radio base station apparatus 20. At this time, if the resources are not fully used or a radio link or a call associated with the setup message can be established within the maximum number of resources (N in step S21), resources for call setup corresponding to the setup message are assigned and newly registered in the user management table 23 (step S28). The setup message is returned with OK to the radio network control apparatus 10 (step S29), and a series of operations are ended.

On the other hand, in the case where resources are fully used or a radio link or a call associated with the setup message cannot be established within the maximum number of resources (Y in step S21) and the setup message is not a message of pre-emption object (for example, Capability = OFF), the setup message is returned with NG to the radio network control apparatus 10 (step S30), and a series of operations are ended.

In the case where resources are fully used or a radio link or a call associated with the setup message cannot be established within the maximum number of resources and the setup message is a message of pre-emption object (Y in step S22), the radio base station apparatus 20 searches resources of existing users in the user management table 23 (step S23). In the case where there is no relevant user (N in step S23), the setup message is returned with NG to the radio network control apparatus 10 (step S30), and a series of operations are ended.

On the other hand, in the case where there exists a relevant user, i.e. in the case where there exists a user having priority level lower than that of the user associated with the setup message and having SF which can be changed, and where the SF required by the setup message (Y in step S23) can be assigned to the call or radio link by changing the SF of the existing users, the pre-emption required indication shown in Figure 4 is transmitted to the radio network control apparatus 10 (step S24). At this time, the user whose SF is to be changed which is notified by the pre-emption required indication to the network control apparatus 10 is not limited to one user and may be a plurality of users..

The radio network control apparatus 10 receives the pre-emption required indication shown in Figure 4, calculates a pattern of possible rate change in accordance with the changed SF values, and transmits the rate change message shown in Figure 3 to the radio base station apparatus 20. Subsequently, the radio base station apparatus 20 receives the rate change message (step S25).

The radio base station apparatus 20 receives the rate change message, changes assignment of existing resources (step S26) in accordance with the change in SF , and transmits a rate change message response to the radio network control apparatus 10 after securing free resources for establishing the radio link or the call associated with the setup massage (step S27).

The radio base station apparatus 20 which has already received the setup message to start the pre-emption, assigns resources released by the rate change to the radio link or the call associated with the setup massage and update the user management table (step S28). Subsequently, the radio base station apparatus 20 returns the setup message with OK to the radio network control apparatus 10 (step S29) to end a series of operations.

Next, details of the step S23 in Figure 7, which are shown in Figure 8, are explained below. First, the user management table is searched for resources of existing users to be released (step S41). On the basis of the search result, the base station apparatus 10 determines whether or not a user assigned resources that can be released exists in the user management table (step S42). When a plurality of different priority levels exist for DchIDs, the highest priority level may be used as the priority level of the user. When there is no user assigned resources that can be released in the user management table (N in step S42), the process proceeds to step S30, and when there exists a user assigned resources that can be released in the user management table (Y in step S42), the process proceeds to step S43. In step S43, the base station apparatus 10 determines whether or not there exists a user with priority level lower than that of the user associated with the setup message to be processed and with Vulnerability in the ON state (step S43). When there exists such a user in step S43, the process proceeds to step S44, and when there is no such user, the process proceeds to step S47.

In step S44, the base station apparatus 10 determines whether or not SFs assigned to the user searched in the step S43 can be changed. In the case of a bearer with SFs which can not be changed (when the number of resources assigned to the bearer is already a minimum value, etc.), the process proceeds to step S47, and in the case of a bearer with SFs which can be changed, the process proceeds to step S45. In step S45, new resources produced for the user associated with the setup message by changing SFs are added together. In step S46, the base station determines whether or not the resources added together exceed predetermined resources required by the setup message. When the resources added together exceed the predetermined resources, the process proceeds to step S24, and when the resources added together are less than the predetermined resources, the process proceeds to step S47.

In step S47, the priority level of the user to be searched is raised by one level in order to expand objects to be searched (to include users with lower priority level in objects to be searched), and then the process returns to step S41.

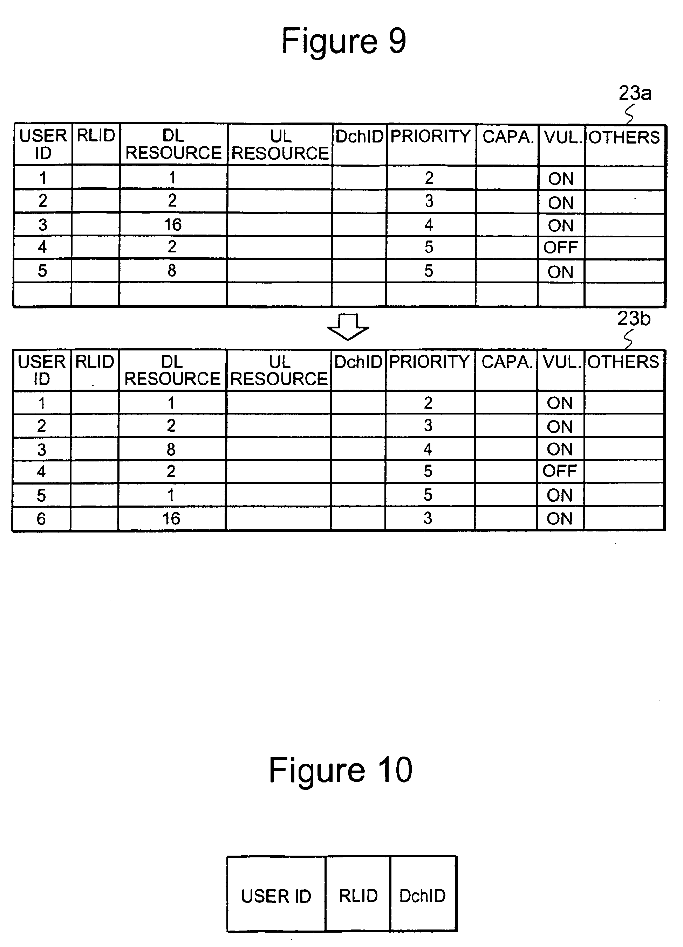

Next, a more specific example is described with reference to the user management table. Figure 9 shows an exemplary configuration of the user management table, and shows a state in which a new user with user ID = 6 is added and the user management table 23a is updated to be the management table 23b. In Figure 9, only user IDs, DL resources and priority levels relating to the present explanation are described, and the other columns are omitted.

As shown in table 23a, it is assumed that there exists a user with user ID =1, DL resource =1, priority level =2, a user with user ID = 2, DL resource = 2, priority level = 3, a user with user ID = 3, DL resource = 16, priority level = 4, a user with user ID = 4, DL resource = 2, priority level = 5, and a user with user ID = 5, DL resource = 8, priority level = 5. In this case, a setup message is assumed to have user ID = 6, DLSF = 8 (corresponding to DL resource = 16 with reference to Figure 6) and priority level = 3. However, it is assumed that only the user with user ID = 4 has the Vulnerability of OFF and the other users have the Vulnerability of ON. Further, it is assumed that the radio base station apparatus 20 has the maximum number of resources = 30.

Since a total of existing DL resources is 29, the remainder obtained by subtracting the total from the maximum number of resources becomes 1 = 30 - 29. First, at most seven DL resources are reduced from the user with user ID = 5 and with the lowest priority level resulting in the minimum number of resources (i.e., one resource) assigned to the user with user ID=5. Next, resources of the user with user ID = 4 is made to be reduced, but is unable to be reduced because the Vulnerability is OFF. Further, eight DL resources is reduced from the user with user ID = 3 and with lower priority level than that of the user associated with the setup message. As a result, a total of sixteen DL resources can be obtained. With the obtained DL resources, DL resources =16 corresponding to DLSF = 8 (see Figure 6) are assigned to the user with user ID = 6 associated with the setup message to be processed.

In this way, resources are successively secured from users with low priority level and with SFs which can be changed, and when resources required by the setup message to be processed can be secured, OK is returned in response to the setup message, while the user is added to the user management table and a new user management table 23b is made. In the above described example, the minimum number of resource to be left is assumed to be one when the number of resources of existing users is reduced, but the minimum number of resource may be two or more in order to maintain a call setup of multi-call, as in the case shown in Figure 6. The minimum number of resource to be left can be appropriately determined according to a design for the system. In the above, the description is made with respect to DL, but the similar description can also be applied to the case ofUL.

[Exemplary embodiment 2]

Next, a second exemplary embodiment according to the present invention is described with reference to Figure 2 and Figure 10. The radio base station apparatus 20 receives a message containing pre-emption setting information (Capability = ON), specifies DchID of a transport channel which can be disconnected, and transmits a pre-emption required indication as shown in Figure 10 to the radio network control apparatus 10. At this time, a plurality of user IDs and further a plurality of DchIDs for each user ID may be specified. Subsequently, the radio network control apparatus 10 receives the pre-emption required indication, and transmits a deletion message for disconnecting the DchID of the specified user to the radio base station apparatus 20, instead of performing the step S13 in Figure 2. This makes it possible to secure resources for the setup user that is subject to the pre-emption setup.

In the case of the second exemplary embodiment, the radio network control apparatus 10 need only transmit the deletion message in accordance with DchID specified by the radio base station apparatus 20, and need not particularly perform bearer selection or determining a possible SF pattern (i.e., information which expected in a massage described in Figure 3) etc.. based on a change in SFs, as in the exemplary embodiment 1. However, since disconnection is performed for each DchID, disconnection of PS call etc. may occur for the user that is subject to the pre-emption.

According to the present exemplary embodiment, the pre-emption function makes it possible to maintain as many links as possible, resulting in resources of existing users being maintained and managed effectively and flexibly.

Furthermore, by releasing resources by a unit of transport channel, call connections using a transport channel other than the released transport channel can be simply maintained even after the pre-emption applies to a user of the call connections.

Although the exemplary embodiments of the present invention have been described above, it will be understood by those skilled in the art that the present invention should not be limited to the described exemplary embodiment, but various changes and modifications can be made within the scope of the present invention.

## Claims

1. A resource management method for a communication network with
a plurality of mobile devices and a base station (20), the plurality of mobile devices communicating with the base station via a plurality of radio links,
each of the plurality of radio links being assigned a plurality of radio resources;
wherein said method comprises:
receiving, at the base station (20), a setup message instructing the base station (20) to establish a new radio link from a radio network controller (10) (step S20),
if a total number of necessary radio resources to establish the new radio link and the radio resources which are assigned to the plurality of radio links is larger than a maximum number of radio resources which are available for the base station (20) (step S21),
selecting at least one radio link from the plurality of radio links based on priority levels that are set for the plurality of radio links, respectively, wherein the setup message comprises information regarding a priority level to be set on the new radio link, each of the plurality of radio links are associated with information about whether each of the plurality of radio link is subject to the releasing of at least one but not all of the plurality of radio resources, and the base station (20) selects at least one radio link that is subject to the releasing of at least one but not all of the plurality of radio resources and has a lower priority level than the priority level to be set on the new radio link in the selecting at least one radio link (step S23);
indicating that a change is necessary in radio resource assignment to the plurality of radio links in order to establish the new radio link (step S12, S24);
releasing at least one but not all of the plurality of radio resources from the radio link which is selected (step S14, S26);
assigning at least one of the plurality of radio resources which is released to the new radio link which is established(step S15, S28).

2. The method according to claim 1, wherein the setup message comprises information regarding at least a minimum number of the necessary radio resources to establish the new radio link.

3. The method according to claim 2, wherein the information regarding at least the minimum number of necessary radio resources is a spreading factor for the new radio link, and the new radio link is established based on a code division multiple access technique.

4. The method according to claim 2, further comprising
transmitting the setup message from the radio network controller (10) (step S11).

5. The method according to claim 1, further comprising
transmitting the setup message from the radio network controller (10) (step S11).

6. The method according to claim 1, wherein the setup message comprises
information about whether the new radio link is subject to being established by releasing at least one radio resource which is assigned to a radio link other than the new radio link, and the base station (20) selects at least one radio link if the new radio link is subject to being established by releasing at least one radio resource which is assigned to a radio link other than the new radio link.

7. The method according to claim 6, further comprising
transmitting the setup message from the radio network controller (10) (step S11).

8. The method according to claim 1, wherein a first radio link and a second radio link are selected from the plurality of radio links in the selecting at least one radio link, all radio resources except a predetermined minimum number of radio resources are released from the first radio link and at least one but not all radio resources are released from the second radio link in the releasing at least one but not all of the plurality of radio resources.

## Patentansprüche

1. Ressourcenverwaltungsverfahren für ein Kommunikationsnetzwerk mit einer Mehrzahl von mobilen Geräten und einer Basisstation (20), wobei die Mehrzahl von mobilen Geräten mit der Basisstation über eine Mehrzahl von Funkverbindungen kommuniziert,
wobei jede der Mehrzahl von Funkverbindungen einer Mehrzahl von Funkressourcen zugeordnet ist;
wobei das Verfahren umfasst:
Empfangen einer Einrichtungsnachricht an der Basisstation (20), welche die Basisstation (20) dazu anweist, eine neue Funkverbindung von einem Funknetzwerkcontroller (10) aufzubauen (Schritt S20),
falls eine Gesamtzahl von erforderlichen Funkressourcen, um die neue Funkverbindung aufzubauen, und die Funkressourcen, welche der Mehrzahl von Funkverbindungen zugeordnet sind, größer als eine Maximalzahl von Funkressourcen ist, welche für die Basisstation (20) verfügbar sind (Schritt S21),
Auswählen wenigstens einer Funkverbindung aus der Mehrzahl von Funkverbindungen basierend auf Prioritätsgraden, die jeweils für die Mehrzahl von Funkverbindungen eingestellt sind, wobei die Einrichtungsnachricht Information betreffend einen für die neue Funkverbindung einzustellenden Prioritätsgrad umfasst, wobei jede von der Mehrzahl von Funkverbindungen mit Information darüber assoziiert ist, ob jede von der Mehrzahl von Funkverbindungen dem Lösen wenigstens einer aber nicht aller von der Mehrzahl von Funkressourcen unterliegt, und wobei die Basisstation (20) wenigstens eine Funkverbindung, die dem Lösen wenigstens einer aber nicht aller von der Mehrzahl von Funkressourcen unterliegt und einen niedrigeren Prioritätsgrad als der für die neue Funkverbindung einzustellende Prioritätsgrad aufweist, beim Auswählen wenigstens einer Funkverbindung (Schritt S23) auswählt;
Anzeigen, dass eine Änderung der Funkressourcenzuordnung zu der Mehrzahl von Funkverbindungen erforderlich ist, um die neue Funkverbindung aufzubauen (Schritt S12, S24);
Lösen wenigstens einer aber nicht aller von der Mehrzahl von Funkressourcen von der Funkverbindung, welche ausgewählt wird (Schritt S14, S26);
Zuordnen wenigstens einer von der Mehrzahl von Funkressourcen, welche gelöst ist, zu der neuen Funkverbindung, welche aufgebaut wird (Schritt S15, S28).

2. Verfahren nach Anspruch 1, wobei die Einrichtungsnachricht Information betreffend wenigstens eine Minimalzahl von erforderlichen Funkressourcen umfasst, um die neue Funkverbindung aufzubauen.

3. Verfahren nach Anspruch 2, wobei die Information betreffend wenigstens die Minimalzahl von erforderlichen Funkressourcen ein Streufaktor für die neue Funkverbindung ist und wobei die neue Funkverbindung basierend auf einer Codemultiplextechnik aufgebaut wird.

4. Verfahren nach Anspruch 2, ferner umfassend
Übertragen der Einrichtungsnachricht von dem Funknetzwerkcontroller (10) (Schritt S11).

5. Verfahren nach Anspruch 1, ferner umfassend
Übertragen der Einrichtungsnachricht von dem Funknetzwerkcontroller (10) (Schritt S11).

6. Verfahren nach Anspruch 1, wobei die Einrichtungsnachricht Information darüber umfasst, ob die neue Funkverbindung dem Aufgebautwerden durch Lösen wenigstens einer Funkressource unterliegt, welche einer anderen Funkverbindung als die neue Funkverbindung zugeordnet ist, und wobei die Basisstation (20) wenigstens eine Funkverbindung auswählt, falls die neue Funkverbindung dem Aufgebautwerden durch Lösen wenigstens einer Funkressource unterliegt, die einer anderen Funkverbindung als die neue Funkverbindung zugeordnet ist.

7. Verfahren nach Anspruch 6, ferner umfassend
Übertragen der Einrichtungsnachricht von dem Funknetzwerkcontroller (10) (Schritt S11).

8. Verfahren nach Anspruch 1, wobei eine erste Funkverbindung und eine zweite Funkverbindung von der Mehrzahl von Funkverbindungen beim Auswählen wenigstens einer Funkverbindung ausgewählt werden, wobei alle Funkressourcen mit Ausnahme einer vorbestimmten Minimalzahl von Funkressourcen von der ersten Funkverbindung gelöst werden und wenigstens eine aber nicht alle Funkressourcen von der zweiten Funkverbindung beim Lösen wenigstens einer aber nicht aller von der Mehrzahl von Funkverbindungen gelöst werden.

## Revendications

1. Procédé de gestion de ressources pour un réseau de communication avec
une pluralité de dispositifs mobiles et une station de base (20), la pluralité de dispositifs mobiles communiquant avec la station de base via une pluralité de liaisons radio,
une pluralité de ressources radio étant attribuée à chaque liaison de la pluralité de liaisons radio ;
dans lequel ledit procédé comprend :
la réception, au niveau de la station de base (20), d'un message de configuration ordonnant à la station de base (20) d'établir une nouvelle liaison radio à partir d'un dispositif de commande de réseau radio (10) (étape S20),
si un nombre total de ressources radio nécessaires pour établir la nouvelle liaison radio et les ressources radio qui sont attribuées à la pluralité de liaisons radio est plus grand qu'un nombre maximal de ressources radio qui sont disponibles pour la station de base (20) (étape S21),
la sélection d'au moins une liaison radio dans la pluralité de liaisons radio d'après des niveaux de priorité qui sont établis pour la pluralité de liaisons radio, respectivement, où le message de configuration comprend des informations concernant un niveau de priorité à établir sur la nouvelle liaison radio, chaque liaison de la pluralité de liaisons radio est associée à des informations selon lesquelles chaque liaison de la pluralité de liaisons radio est soumise ou non à la libération d'au moins une ressource de la pluralité de ressources radio, mais pas à la totalité d'entre elles, et la station de base (20) sélectionne au moins une liaison radio qui est soumise à la libération d'au moins une ressource de la p-uralité de ressources radio, mais pas à la totalité d'entre elles, et a un niveau de priorité inférieur au niveau de priorité à établir sur la nouvelle liaison radio lors de la sélection d'au moins une liaison radio (étape S23) ;
l'indication du fait qu'une modification est nécessaire dans l'attribution de ressources radio à la pluralité de liaisons radio afin d'établir la nouvelle liaison radio (étape S12, S24) ;
la libération d'au moins une ressource de la pluralité de ressources radio, mais pas de la totalité d'entre elles, de la liaison radio qui est sélectionnée (étape S14, S26) ;
l'attribution d'au moins une ressource de la pluralité de ressources radio qui est libérée pour la nouvelle liaison radio qui est établie (étape S15, S28).

2. Procédé selon la revendication 1, dans lequel le message de configuration comprend des informations concernant au moins un nombre minimal des ressources radio nécessaires pour établir la nouvelle liaison radio.

3. Procédé selon la revendication 2, dans lequel les informations concernant au moins le nombre minimal de ressources radio nécessaires sont un facteur d'étalement pour la nouvelle liaison radio, et la nouvelle liaison radio est établie d'après une technique d'accès multiple par répartition en code.

4. Procédé selon la revendication 2, comprenant en outre
l'émission du message de configuration par le dispositif de commande de réseau radio (10) (étape S11).

5. Procédé selon la revendication 1, comprenant en outre
l'émission du message de configuration par le dispositif de commande de réseau radio (10) (étape S11).

6. Procédé selon la revendication 1, dans lequel le message de configuration comprend
des informations selon lesquelles la nouvelle liaison radio est soumise ou non à un établissement par libération d'au moins une ressource radio qui est attribuée à une liaison radio autre que la nouvelle liaison radio, et la station de base (20) sélectionne au moins une liaison radio si la nouvelle liaison radio est soumise à un établissement par libération d'au moins une ressource radio qui est attribuée à une liaison radio autre que la nouvelle liaison radio.

7. Procédé selon la revendication 6, comprenant en outre
l'émission du message de configuration par le dispositif de commande de réseau radio (10) (étape S11).

8. Procédé selon la revendication 1, dans lequel une première liaison radio et une seconde liaison radio sont sélectionnées dans la pluralité de liaisons radio lors de la sélection d'au moins une liaison radio, toutes les ressources radio excepté un nombre minimal prédéterminé de ressources radio sont libérées de la première liaison radio et au moins une ressource radio, mais pas la totalité d'entre elles, est libérée de la seconde liaison radio lors de la libération d'au moins une ressource radio, mais pas de la totalité de la pluralité de ressources radio.
